# EUROPÄISCHE PATENTSCHRIFT

(11) **EP 1 022 637 B1**
(45) Veröffentlichungstag und Bekanntmachung des Hinweises auf die Patenterteilung: **04.05.2005**
(21) Anmeldenummer: 00100602.2
(22) Anmeldetag: 13.01.2000
(51) Int. Cl.: G05D 23/13

(54) **Thermostatventil**
Thermostatic valve
Robinet thermostatique

(30) Priorität: 19.01.1999 DE 19901852
(43) Veröffentlichungstag der Anmeldung: 26.07.2000
(73) Patentinhaber: Hansgrohe AG, 77761 Schiltach (DE)
(72) Erfinder: Lorch, Werner, 78713 Schramberg (DE)
(74) Vertreter: Patentanwälte Ruff, Wilhelm, Beier, Dauster & Partner

(56) Entgegenhaltungen:
- GB-A- 2 076 127

## Beschreibung

Thermostatventile sind bekannt. Sie enthalten ein Ausdehnungselement, das im Mischwasser angeordnet ist und dessen Temperatur regelt. Zum Einstellen der Solltemperatur ist ein Bedienelement vorgesehen. Ein zweites Bedienelement dient zum Öffnen und Schließen des Ventils.

Es ist bereits ein Thermostatventil nach dem ersten Teil des Anspruchs 1 bekannt (GB-A-2076127). Bei diesem Thermostatventil werden das kalte Wasser und das Mischwasser durch jeweils eine zwei Steuerscheiben aufweisende Mengensteuerung gesteuert. Der Mischwasserauslaß weist einen Querschnitt auf, der kleiner ist als die Summe der beiden in den Armaturenkörper führenden Einlässe.

Der Erfindung liegt die Aufgabe zugrunde, eine kompakt aufgebaute geräuscharme Armatur mit einem Thermostaten zu schaffen.

Zur Lösung dieser Aufgabe schlägt die Erfindung ein Thermostatventil mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Das von der Erfindung vorgeschlagene Thermostatventil ist so aufgebaut, dass der Mischwasserauslass gedrosselt ist. Dies führt dazu, dass das Ventil geräuscharm arbeitet.

Zur Verwirklichung der Drosselung des Mischwasserauslasses kann erfindungsgemäß in Weiterbildung vorgesehen sein, dass der Strömungsquerschnitt des Mischwasserauslasses kleiner als die Summe der Strömungsquerschnitte des Kaltwassereinlasses und des Warmwassereinlasses ist. Die Drosselung erfolgt daher im Wesentlichen nur in der Ventilsteuerung.

Erfindungsgemäß kann in Weiterbildung vorgesehen sein, dass zur Mengensteuerung der Querschnitt der Einlässe in das Ventil und der Querschnitt des Auslasses aus dem Ventil geändert wird.

In nochmaliger Weiterbildung der Erfindung kann vorgesehen sein, dass beim Schließen des Ventils der Auslass vor dem Einlass geschlossen wird. Auch diese Maßnahme trägt dazu bei, dass das Ventil gedrosselt ist.

Die Erfindung schlägt vor, dass das Wasser axial in das Ventil einströmt und das Ventil auch wieder axial verlässt.

Insbesondere kann in Weiterbildung der Erfindung vorgesehen sein, dass das Ventil eine Scheibensteuerung aufweist, bei der also zwei Scheiben vorgesehen sind, die in einer gemeinsamen Steuerfläche aneinander anliegen, wobei eine der beiden Scheiben gegenüber der anderen verschoben oder verdreht werden kann.

Erfindungsgemäß kann vorgesehen sein, dass das Wasser beim Eintritt in das Ventil und beim Verlassen des Ventils durch die Scheibensteuerung hindurch geht.

Erfindungsgemäß kann vorgesehen sein, dass die Mengensteuerung durch ein Verdrehen der einen Steuerscheibe bewirkt wird.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: einen Axialschnitt durch ein Thermostatventil nach der Erfindung;
- Fig. 2: eine Ansicht einer feststehenden Steuerscheibe von unten;
- Fig. 3: einen Schnitt durch die feststehende Steuerscheibe der Fig. 2;
- Fig. 4: eine Ansicht der Steuerscheibe der Fig. 2 von oben;
- Fig. 5: einen weiteren Schnitt durch die Steuerscheibe der Fig. 2 und 4;
- Fig. 6: eine Ansicht der bewegbaren Steuerscheibe von unten;
- Fig. 7: einen Schnitt durch die bewegbare Steuerscheibe;
- Fig. 8: eine Ansicht der bewegbaren Steuerscheibe der Fig. 6 von oben;
- Fig. 9: einen zweiten Schnitt durch die bewegbare Steuerscheibe;
- Fig. 10: schematisch die Aufsicht auf die beiden Steuerscheiben bei teilweise geöffnetem Ventil.

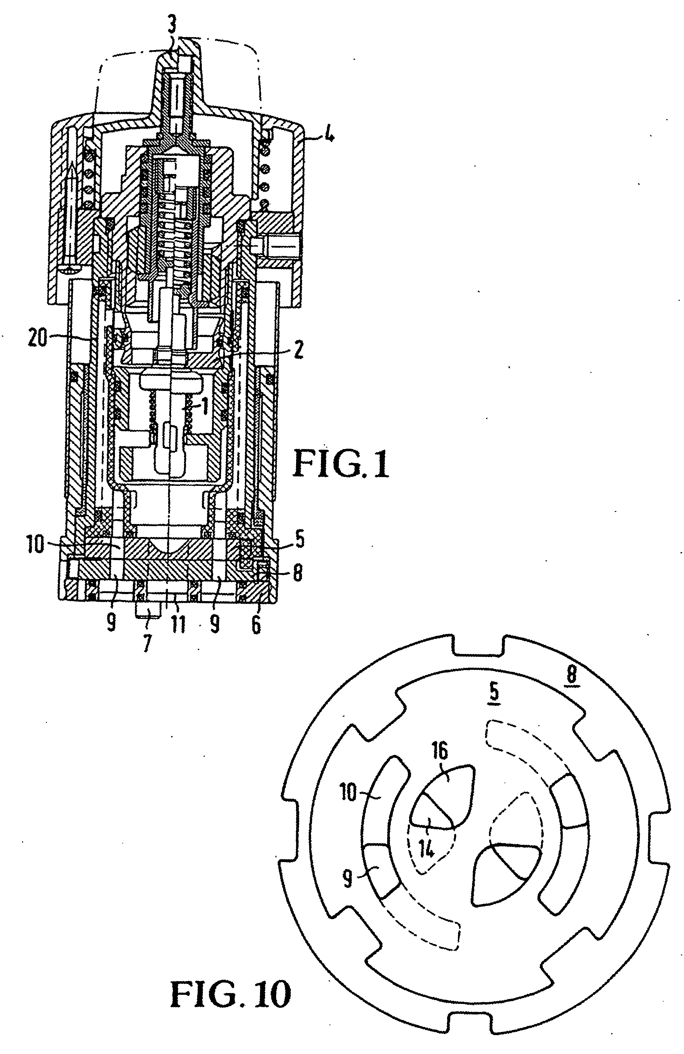

Fig. 1 zeigt einen Axialschnitt durch ein Thermostatventil, wie es von der Erfindung vorgeschlagen wird. Das Ventil ist als Ventilkartusche ausgebildet und kann in der dargestellten Weise in einen Armaturenkörpers eingesetzt werden, der aus Gründen der Vereinfachung nicht dargestellt ist. In dem Ventil ist ein Ausdehnungselement 1 angeordnet, das ein Thermostatventil 2 beeinflusst. Zur Verhinderung der Ausgangsposition des Thermostatventils ist ein erstes Bedienelement 3 vorgesehen, das im dargestellten Beispiel zentral durch ein zweites Bedienelement 4 hindurchragt. Mit Hilfe des zweiten Bedienelementes 4 kann eine bewegbare Steuerscheibe 5 verdreht werden.

Die Ventilkartusche enthält einen Boden 6, der die Kartusche auf ihrer zum Einsetzen in den Armaturenkörper bestimmten Seite abschließt. Der Kartuschenboden 6 enthält einen Zentrieransatz 7. Unmittelbar oberhalb des Bodens ist eine feststehende Steuerscheibe 8 angeordnet, die beispielsweise aus Keramik besteht. Auf der feststehenden Steuerscheibe 8 liegt die bewegbare Steuerscheibe 5 auf, die mit Hilfe des Bedienelementes 4 verdreht werden kann. Die feststehende Steuerscheibe 8 weist zwei Öffnungen 9 auf, von denen die eine Öffnung 9 für das kalte Wasser und die andere Öffnung 9 für das warme Wasser bestimmt ist. In ähnlicher Weise weist auch die verdrehbare Steuerscheibe 5 zwei Öffnungen 10 auf. Die Verbindungen der Öffnungen 9 der feststehenden Steuerscheibe 8 mit den Anschlüssen des Armaturenkörpers geschieht mit Hilfe des Bodens 6, der mehrere abgedichtete Durchgangsöffnungen aufweist. Die Wirkungsweise der Armatur ist so, dass das kalte und warme Wasser durch die Öffnungen 9 und 10 in das Innere des Ventils einströmt, wobei das Ventilelement 2 das gewünschte Mischungsverhältnis zwischen warmem und kaltem Wasser herstellt. Das Mischwasser fließt durch eine in dem Schnitt der Fig. 1 nicht dargestellte Öffnung der bewegbaren Steuerscheibe 5 in eine ebenfalls nicht sichtbare Öffnung der feststehenden Steuerscheibe 8 und von dort durch eine mittlere Öffnung 11 des Bodens 6 in den entsprechenden Kanal des Armaturenkörpers.

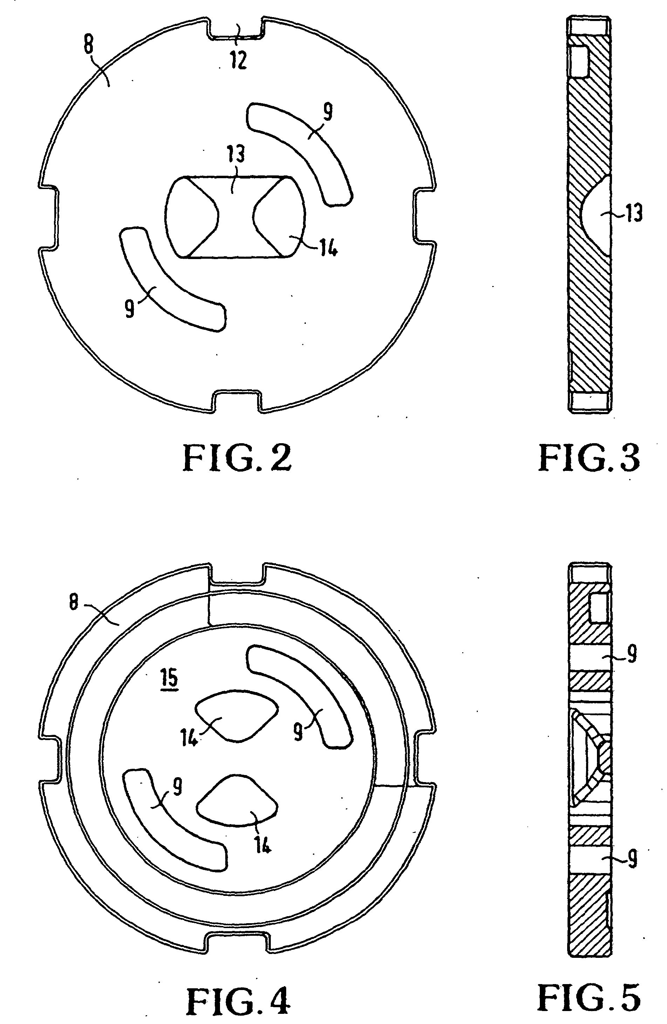

In den Fig. 2 bis 5 sind nun Einzelheiten der feststehenden Steuerscheibe 8 dargestellt, die auch als Verteilerscheibe bezeichnet wird. Fig. 2 zeigt die Ansicht dieser Scheibe von unten, also aus Richtung des Bodens 6. Die Öffnungen 9 für das kalte und warme Wasser sind als kreisbogenförmige Schlitze mit koaxialen Außen- und Innenkanten ausgebildet. Beide Öffnungen erstrecken sich über etwas weniger als einen Viertelkreis. An der Außenseite der kreisrunden Verteilerscheibe 8 sind vier Kerben 12 angeordnet, die dazu dienen, die Verteilerscheibe 8 korrekt in der Kartusche zu positionieren.

In der Mitte der Verteilerscheibe 8 ist eine Vertiefung 13 vorhanden, die über zwei Durchgangsöffnungen 14 mit der gegenüberliegenden in Fig. 4 zu sehenden Seite in Verbindung steht. Diese beiden Durchgangsöffnungen 14 weisen etwa die Form eines abgerundeten Kreissektors auf und liegen symmetrisch zu einem Durchmesser und auf einem senkrecht dazu verlaufenden zweiten Durchmesser.

Die Fig. 3 zeigt einen Schnitt durch die Verteilerscheibe 8, der so gelegt ist, dass die Vertiefung 13 zu sehen ist.

Die Fig. 4 zeigt die der bewegbaren Steuerscheibe 5 zugewandte Fläche 15 der Verteilerscheibe 8. Hier ist zu sehen, dass die beiden Durchgangsöffnungen 14 in dieser Fläche als getrennte Öffnungen ausmünden.

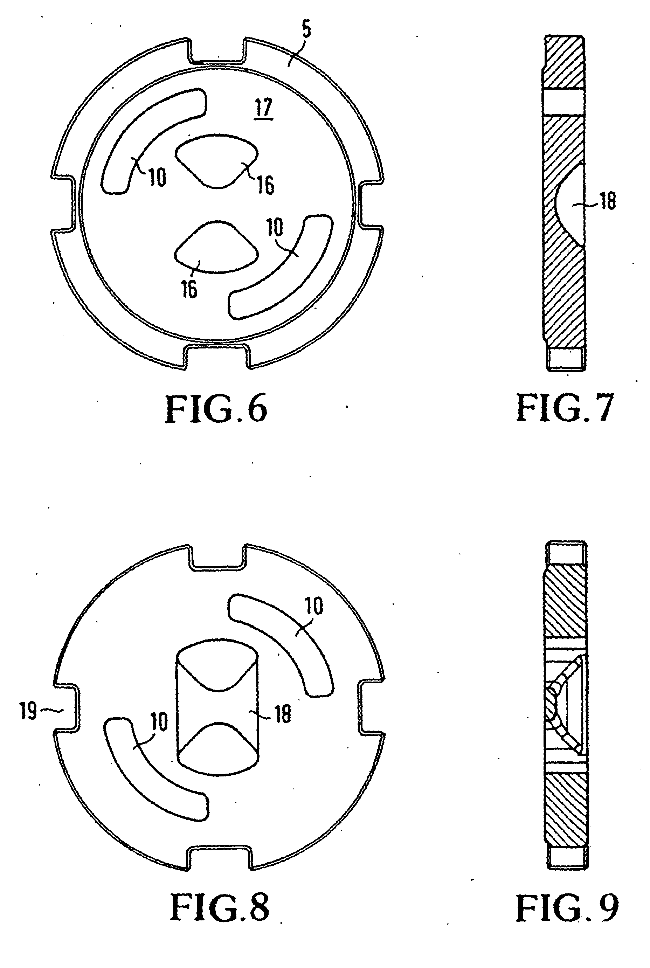

Die Figuren 6 bis 9 zeigen in ähnlichen Darstellungen die bewegbare Steuerscheibe 5, wobei die Darstellung in den Figuren 6 bis 9 maßstabsgetreu zu den Darstellungen der Fig. 2 bis 5 ist. Auf den ersten Blick kann man sehen, dass die Anordnung der Durchgangsöffnungen 10 für das kalte und warme Wasser identisch ist zu der Anordnung bei der Verteilerscheibe 8. Das Gleiche gilt auch für die Durchgangsöffnungen 16, die in der Unterseite 17 der bewegbaren Steuerscheibe 5 ausmünden. Auf der gegenüberliegenden in Fig. 8 dargestellten Oberseite gehen diese Durchgangsöffnungen 16 in eine Vertiefung 18 über, die der Vertiefung 13 der Verteilerscheibe entspricht. Auch hier sind Kerben 19 vorhanden, um die bewegbare Steuerscheibe 5 korrekt positioniert in dem Käfig 20 zu halten, der die Drehbewegung des Bedienelementes 4 auf die Steuerscheibe 5 überträgt.

Im zusammengesetzten Zustand der Ventilsteuerung liegt die in Fig. 5 dargestellte Seite 15 der Verteilerscheibe an der in Fig. 6 dargestellten Unterseite 17 der bewegbaren Steuerscheibe 5 an. Die Steuerung ist so ausgebildet, dass das Wasser sowohl beim Eintritt in die Steuerung als auch bei dem Verlassen der Steuerung durch Öffnungen beider Steuerscheiben hindurchgeht. Der Strömungsquerschnitt sowohl des Einlasses als auch des Auslasses wird durch Verdrehung der bewegbaren Steuerscheibe 5 verändert. Dies ist schematisch in Fig. 10 dargestellt, die die beiden Steuerscheiben in einer bestimmten Winkelposition aufeinander gelegt darstellt. Sowohl die Eingangsöffnungen 9, 10 als auch die Ausgangsöffnungen 16, 14 überdecken sich mehr oder weniger weit, je nach Stellung der bewegbaren Steuerscheibe 5. Dies bedeutet, dass eine Änderung des Strömungsquerschnitts bei der Mengensteuerung sowohl beim Eintritt in das Ventil als auch beim Verlassen des Ventils erfolgt. Auf diese Weise kann dafür gesorgt werden, dass der Strömungsquerschnitt des Auslasses immer kleiner ist als der Strömungsquerschnitt der Einlässe, beispielsweise ein Wert von zwei Drittel einnimmt.

## Patentansprüche

1. Thermostatventil, mit
1.1 einem Armaturenkörper,
1.2 einem in das Innere des Ventils führenden Kaltwassereinlass,
1.3 einem in das Innere des Ventils führenden Warmwassereinlass,
1.4 einem aus dem Armaturenkörper herausführenden Mischwasserauslass,
1.5 einem Thermostaten zur Bestimmung der Temperatur des Mischwassers,
1.6 einem Mengensteuerventil, wobei
1.7 der Mischwasserauslass aus dem Ventil gedrosselt ist, **dadurch gekennzeichnet, dass**
1.8 das Mengensteuerventil eine Scheibensteuerung mit einer feststehenden und einer bewegbaren Steuerscheibe (5) aufweist und
1.9 derart ausgebildet ist, dass sie zur Mengensteuerung den Querschnitt der Einlässe in das Ventil und den Querschnitt des Mischwasserauslasses aus dem Ventil ändert.

2. Thermostatventil nach Anspruch 1, bei dem der Strömungsquerschnitt des Mischwasserauslasses kleiner als die Summe der Strömungsquerschnitte von Kaltwassereinlass und Warmwassereinlass ist.

3. Thermostatventil nach einem der vorhergehenden Ansprüche, bei dem beim Schließen des Ventils der Auslass vor den Einlässen geschlossen wird.

4. Thermostatventil nach einem der vorhergehenden Ansprüche, bei dem der Einlass in das Ventil und der Auslass aus diesem axial erfolgen.

5. Thermostatventil nach einem der vorhergehenden Ansprüche, bei dem das zu steuernde Wasser beim Eintritt in das Ventil und beim Verlassen des Ventils durch die Mengensteuerung hindurchgeht.

6. Thermostatventil nach einem der vorhergehenden Ansprüche, bei dem die Mengensteuerung durch ein Verdrehen der bewegbaren Steuerscheibe (5) erfolgt.

## Claims

1. A thermostat valve with
1.1 a fixture body,
1.2 a cold water inlet leading into the valve,
1.3 a hot water inlet leading into the valve,
1.4 a mixed water outlet leading out of the fixture body,
1.5 a thermostat to determine the temperature of the mixed water,
1.6 a volume control valve, whereby
1.7 the mixed water outlet leaving the valve is throttled, **characterized in that**
1.8 the volume control valve has a disk control with one fixed and one movable control disk (5), and
1.9 the volume control valve is designed so that it changes the cross-section of the inlets leading into the valve and the cross-section of the mixed water outlet leaving the valve to control volume.

2. The thermostat valve according to claim 1, **characterized in that** the flow cross-section of the mixed water outlet is less than the sum of the flow cross-sections of the cold water inlet and hot water inlet.

3. The thermostat valve according to one of the prior claims, **characterized in that** the outlet is closed before the inlets when the valve is being closed.

4. The thermostat valve according to one of the prior claims, **characterized in that** the inlets entering the valve and the outlet leaving the valve are both axial.

5. The thermostat valve according to one of the prior claims, **characterized in that** the water to be controlled passes through the volume control when entering the valve and leaving the valve.

6. The thermostat valve according to one of the prior claims, **characterized in that** the volume is controlled by rotating the movable control disk (5).

## Revendications

1. Robinet thermostatique, avec
1.1. un corps de robinetterie,
1.2. une admission d'eau froide menant à l'intérieur du robinet,
1.3. une admission d'eau chaude menant à l'intérieur du robinet,
1.4. une sortie d'eau mitigée menant à l'extérieur du corps de robinetterie,
1.5. un thermostat destiné à déterminer la température de l'eau mitigée,
1.6. un robinet de réglage du débit,
1.7.la sortie d'eau mitigée étant étranglée hors du robinet, **caractérisé en ce que**
1.8.le robinet de réglage du débit présente une commande à disques avec un disque de réglage (5) fixe et un mobile et
1.9.est réalisé de telle manière qu'il modifie, en vue du réglage du débit, la section des admissions dans le robinet et la section de la sortie d'eau mitigée hors du robinet.

2. Robinet thermostatique selon la revendication 1, pour lequel la section de passage de la sortie d'eau mitigée est inférieure à la somme des sections de passage d'admission d'eau froide et d'admission d'eau chaude.

3. Robinet thermostatique selon l'une quelconque des revendications précédentes, pour lequel lors de la fermeture du robinet, la sortie est fermée avant les admissions.

4. Robinet thermostatique selon l'une quelconque des revendications précédentes, pour lequel l'admission dans le robinet et la sortie hors de ce dernier s'effectuent axialement.

5. Robinet thermostatique selon l'une quelconque des revendications précédentes, pour lequel l'eau à régler passe dans le robinet lors de l'admission et traverse la commande du débit lors de la sortie du robinet.

6. Robinet thermostatique selon l'une quelconque des revendications précédentes, pour lequel la commande du débit s'effectue via un déplacement angulaire du disque de réglage (5) mobile.
